# EUROPÄISCHE PATENTSCHRIFT

(11) **EP 0 994 800 B1**
(45) Veröffentlichungstag und Bekanntmachung des Hinweises auf die Patenterteilung: **02.05.2007**
(21) Anmeldenummer: 98925613.6
(22) Anmeldetag: 18.05.1998
(51) Int. Cl.: B62D 65/00, B23K 26/00

(54) **VERFAHREN BEI DER HERSTELLUNG EINER KRAFTFAHRZEUGKAROSSERIE MITTELS LASERSCHWEISSEN UND KRAFTFAHRZEUGKAROSSERIE**
METHOD FOR PRODUCING A VEHICLE BODY BY LASER WELDING, AND CORRESPONDING VEHICLE BODY
PROCEDE DE SOUDAGE AU LASER APPLIQUE LORS DE LA PRODUCTION D'UNE CARROSSERIE DE VEHICULE A MOTEUR ET CARROSSERIE DE VEHICULE AINSI OBTENUE

(30) Priorität: 10.07.1997 DE 19729485
(43) Veröffentlichungstag der Anmeldung: 26.04.2000
(73) Patentinhaber: Volkswagen Aktiengesellschaft, 38436 Wolfsburg (DE)
(72) Erfinder: HAMMER, Thorge, D-38554 Weyhausen (DE)
(86) Internationale Anmeldenummer: PCT/EP1998/002918
(87) Internationale Veröffentlichungsnummer: WO 1999/002390

(56) Entgegenhaltungen:
- DE-A- 3 803 071
- DE-A- 4 104 256
- DE-A- 19 526 571

## Beschreibung

Die Erfindung bezieht sich auf ein Verfahren bei der Herstellung einer Kraftfahrzeugkarosserie mittels Laserschweißen nach dem Oberbegriff des Anspruches 1.

Bei einem bekannten Verfahren zum Stumpfschweißen von Dünnblechen (DE 38 03 071 A1) insbesondere zum Stumpfschweißen von tiefgezogenen Preßteilen für Karosserien werden zunächst die beiden zu verschweißenden Bleche kantenfluchtend fixiert verspannt und mit einem Abstand zwischen den beiden einander gegenüberstehenden zu verschweißenden Kanten positioniert. Dann beschneiden ein bahngeführter Laserkopf oder zwei gemeinsam bahngeführte Laserköpfe die beiden Blechkanten. Die beiden komplementär, laserbeschnittenen Blechkanten werden durch Verschieben mindestens eines der fixiert verspannten Bleche auf berührenden Stoß zusammengefahren. Dann verschweißt ein durch die gleiche Bahnführung gesteuerter Laserkopf die beiden Blechkanten miteinander. Eine für das Verfahren vorgesehene Schweißvorrichtung für tiefgezogene Preßteile hat zwei Schlitten, an deren Auflagen auswechselbare Konturenbetten angeordnet sind, deren Spannfläche mit der Soll-Raumform der zu verschweißenden Preßteile übereinstimmt.

Mit dem bekannten Verfahren soll ein äußerst geringer Fügespalt beim Stumpfstoß der Blechkanten erreicht werden, so daß das nachfolgende Laserschweißen eine einwandfreie Stumpfschweißnaht ergibt. Wo dieses Verfahren in Verbindung mit der Herstellung von Fahrzeugkarosserien verwendet werden soll, wird nicht angegeben. Im dargestellten Ausführungsbeispiel wird lediglich ein U-förmiges Trägerteil durch ein etwas gebogenes, entsprechend U-förmiges Trägerteil verlängert und durch Laserschweißen verbunden. Ein solches verlängertes Trägerteil wäre insgesamt und einstückig einfacher durch Tiefziehen herstellbar.

Weiterhin ist aus der DE-A1-41 04 256 ein Verfahren zum Herstellen von durch Tiefziehen umgeformten Formkörpern bekannt, bei dem vor dem Tiefziehen ein dickeres Blechstück in ein dünneres Blechstück eingesetzt und beide miteinander verschweißt werden. Die Blechstücke werden in einem gemeinsamen Vorgang mit einem Laserkopf ausgeschnitten. Jedoch erfolgt die Führung des Laserkopfes beim Schneiden auf einer anderen Bahn als beim nachfolgenden Schweißen.

Der Erfindung liegt die Aufgabe zugrunde, ein Verfahren bei der Herstellung einer Kraftfahrzeugkarosserie mittels Laserschweißen zu schaffen, das eine einfache und kostengünstige Herstellung von Karosseriemodifikationen erlaubt, sowie weiterhin eine entsprechende Kraftfahrzeugkarosserie anzugeben.

Die Aufgabe hinsichtlich des Verfahrens wird mit den Merkmalen des Anspruchs 1 gelöst.

Gemäß Anspruch 1 ist ein erstes Blechteil ein Außenhautteil der Karosserie und eine zugeordnete, laserbeschnittene Blechkante stellt eine in einem Verfahrensschritt hergestellte, definierte Schnittstelle an der Karosserie dar.

Ein zweites Blechteil ist eine Außenhautkomponente der Karosserie mit einer in einem Verfahrensschritt hergestellten, laserbeschnittenen Blechkante mit einem komplementären Kantenverlauf zur definierten Schnittstelle.

Die Außenhautkomponente wird mit ihrer laserbeschnittenen Blechkante in einem weiteren Verfahrensschritt mit der laserbeschnittenen Blechkante des Außenhautteils an der definierten Schnittstelle zusammengeführt und anschließend werden die beiden laserbeschnittenen Blechkanten in einem weiteren Verfahrensschritt laserverschweißt.

Es geht somit hier nicht darum, lediglich Karosseriebauteile aus Einzelteilen zusammenzusetzen und zusammenzuschweißen, die auch alternativ mit anderen Techniken einfach herstellbar wären. Vielmehr können mit dem vorliegenden, karosseriespezifischen Verfahren einfach und kostengünstig problematische Aufgaben bei der Karosserieherstellung gelöst werden:

Von den Automobilherstellern werden regelmäßig modifizierte Erscheinungsformen von Großserien-Fahrzeugtypen in kleineren Stückzahlen hergestellt. Insbesondere können dies sportlich ausgelegte, modifizierte Fahrzeuge sein, deren Karosserien beispielsweise Radhausverbreiterungen, Motorbuckel, Spoiler, etc. aufweisen. Der Aufwand für spezielle

Tiefziehwerkzeuge für Radhausbleche mit Verbreiterungen, Motorhauben mit Motorbuckel, etc. ist bei geringen Fahrzeugstückzahlen sehr hoch und meist nicht tragbar. Zudem können bei solchen modifizierten Blechteilen tiefe Mulden ggf. mit Hinterschneidungen auftreten, die Probleme beim Tiefziehen ergeben. Regelmäßig werden daher z. B. bei Radhausverbreiterungen lediglich Kunststoffteile an den Radhausausschnittkanten angesetzt und dort verbunden, die wenig stabil und optisch wenig ansprechend sind. In kleinen Spezialwerkstätten, sog. Tuner-Werkstätten werden Serienfahrzeuge sportlicher hergerichtet, wobei dort beispielsweise Radhausverbreiterungen von Hand mit üblichen Schweißtechniken durch eingesetzte Bleche hergestellt werden; solche Verfahren sind für die Serienherstellung modifizierter Erscheinungsformen zu aufwendig und nicht praktikabel.

Mit dem erfindungsgemäßen Verfahren sind dagegen modifizierbare Erscheinungsformen von Karosserien eines Großserientyps in Kleinserien einfach und kostengünstig herstellbar. Dazu wird von einem Außenhautteil eines unmodifizierten, tiefgezogenen Serienteils, beispielsweise an der Radhausausschnittkante unter Bildung der laserbeschnittenen Blechkante ein nicht mehr benötigtes Teilstück abgeschnitten. Als weitere Außenhautkomponente wird dann ein Modifikationsteil, beispielsweise ein Radhausverbreiterungsblech mit komplementär laserbeschnittener Blechkante angeschweißt. Es ist somit ein Modulkonzept realisierbar bei dem ausgehend von Großserienkarosserien schnell, einfach und kostengünstig modifizierte Erscheinungsformen als Kleinserien hergestellt werden können.

Die Modifikationsteile können dabei bevorzugt an den fertigen Karosserien, insbesondere an fertigen Rohkarosserien angebracht werden. Dabei wird vorteilhaft ein Modifikationsteil an der Stelle der Serienkarosserie aufgelegt, wo es zur Modifizierung der Karosserie ggf. als Ersatz oder Ergänzung eines Großserienteils verbunden werden soll. Mit nur einem Laserschnitt wird dann zur Herstellung komplementärer laserbeschnittener Blechkanten sowohl ein Randstreifen des Modifikationsteils als auch ein nicht mehr benötigtes Teilstück des Serienteils abgeschnitten. Dadurch ist die Führung des Laserschneidkopfs unkritisch, da in jedem Fall komplementär zusammenpassende Schnittkanten erzeugt werden. Mit dem erfindungsgemäßen Verfahren sind zudem tiefziehkritische Bauteile mit Mulden mit Hinterschneidungen und/oder mit tiefen Mulden einfach herstellbar. Solche Bauteile werden so segmentiert, daß an den einzelnen Blechen keine Tiefziehprobleme auftreten, wobei dann diese Bleche entsprechend dem erfindungsgemäßen Verfahren zusammengeschweißt werden. Dazu wird ein Außenhautteil bahngesteuert laserbeschnitten zur Bildung einer ersten Blechkante entsprechend einer definierten Trennlinie. Ein zweites Blechteil mit komplementär laserbeschnittener Blechkante wird dann angeschweißt, wobei das zweite Blechteil so geformt ist, daß sich in Verbindung mit dem ersten Blechteil eine Mulde mit Hinterschneidungen und/oder eine tiefe Mulde ergibt.

Besonders vorteilhaft läßt sich damit eine Mulde im Heckabschlußblech oder in der Heckklappe einer Karosserie zur Aufnahme einer Kennzeichentafel herstellen. Die Trennlinie bzw. die Schweißnaht wird dabei weitgehend unsichtbar an einem oberen, muldeninnenseitigen Muldenrand und/oder unter der Kennzeichentafel angeordnet.

Das Heckabschlußblech kann zur Herstellung der Mulde für eine Kennzeichentafel als Einzelbauteil vor dem Einbau in eine Karosserie bearbeitet werden. Eine Bearbeitung ist jedoch auch an der fertigen Rohkarosse möglich entsprechend der vorstehend geschilderten Bearbeitung zur Herstellung modifizierter Erscheinungsformen.

Die Aufgabe der Erfindung wird hinsichtlich der Kraftfahrzeugkarosserie mit den Merkmalen des Anspruch 7 gelöst.

Gemäß Anspruch 7 wird eine Kraftfahrzeugkarosserie vorgeschlagen, die unter Verwendung eines der vorstehend beschriebenen Verfahren hergestellt ist, wobei modifizierte Erscheinungsformen von Karosserien, insbesondere mit Radhausverbreiterungen und/oder Motorbuckel und/oder Spoilern durch Anschweißen von Modifikationsteilen an laserbeschnittene, unmodifizierte Serienblechteile der Karosserie hergestellt sind und/oder tiefe Mulden und/oder Mulden mit Hinterschneidungen so segmentiert und zusammengesetzt und verschweißt sind, daß keine Tiefziehprobleme auftreten.

Anhand einer Zeichnung wird die Erfindung näher erläutert.

Es zeigen:
- Fig. 1: eine perspektivische Ansicht eines Kraftfahrzeugs in einer gegenüber einem Großserientyp modifizierten, sportlichen Erscheinungsform, und
- Fig. 2: einen Schnitt entlang der Linie A-A aus Fig. 1 im Bereich einer Mulde zur Aufnahme einer Kennzeichentafel.

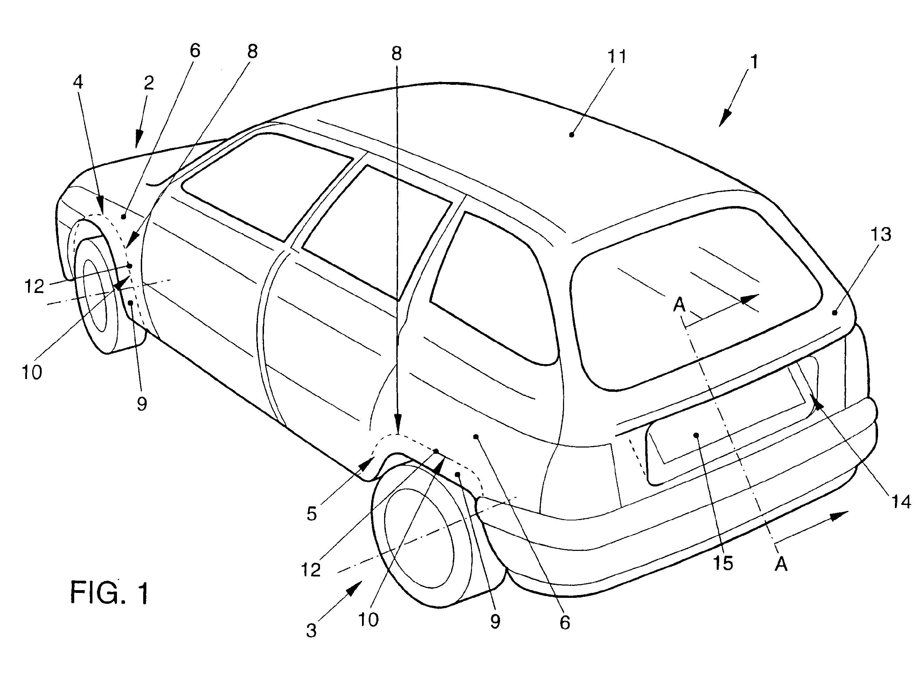

In der Fig. 1 ist eine perspektivische Ansicht eines Kraftfahrzeugs 1 in einer gegenüber einem Großserientyp modifizierten, sportlichen Erscheinungsform dargestellt. Dieses Kraftfahrzeug 1 weist in einem Vorderradbereich 2 und in einem Hinterradbereich 3 jeder Fahrzeuglängsseite jeweils eine Radhausverbreiterung 4 bzw. 5 auf.

Zur Herstellung dieser Radhausverbreiterungen 4, 5 wird von einem Außenhautteil 6 eines unmodifizierten, tiefgezogenen Kotflügels an einer Radhausausschnittkante ein nicht mehr benötigtes Teilstück mittels eines Laserkopfes abgeschnitten. Dadurch wird eine laserbeschnittene Blechkante 8 ausgebildet. Als weitere Außenhautkomponente wird dann ein Radhausverbreiterungsblech 9 mit komplementär zu der Blechkante 8 laserbeschnittener Blechkante 10 als Modifikationsteil angeschweißt.

In einem ersten Verfahrensschritt wird hierzu das Radhausverbreiterungsblech 9 an der Stelle des Außenhautteils 6 aufgelegt, wo es zur Modifizierung der Karosserie 11 als Ergänzung verbunden werden soll. Sodann wird in einem zweiten Verfahrensschritt mit nur einem Laserschnitt sowohl ein Randstreifen des Radhausverbreiterungsblechs 9 als auch ein nicht mehr benötigtes Teilstück des Außenhautteils 6 zur Herstellung der komplementären Blechkanten 8, 10 abgeschnitten. In einem nachfolgenden Verfahrensschritt wird die Blechkante 10 des Radhausverbreiterungsblechs 9 mit der Blechkante 8 des Außenhautteils 6 an der durch die Blechkanten 8, 10 genau definierten Schnittstelle 12 zusammengeführt. In einem weiteren Verfahrensschritt werden schließlich das Radhausverbreiterungsblech 9 und das Außenhautteil 6 entlang der Schnittstelle 12 laserverschweißt.

Derartige Radhausverbreiterungen 4, 5 können an fertigen Karosserien 11, insbesondere an fertigen Rohkarosserien oder auch vor der Rohkarosseriemontage an den Radhausblechen angebracht werden. Zusätzlich können an einem Kraftfahrzeug 1 auf die gleiche Art und Weise z.B. auch Spoiler und/oder Motorbuckel angebracht werden.

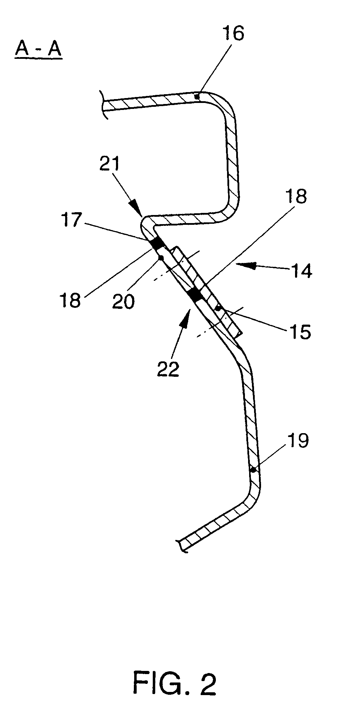

In der Fig. 2 ist ein Querschnitt entlang der Linie A - A der Fig. 1 durch einen Teil einer Heckklappe 13 des Kraftfahrzeugs 1 im Bereich einer tiefen Mulde 14 zur Aufnahme einer Kennzeichentafel 15 dargestellt. Zur Herstellung einer derartigen tiefen Mulde 14 ggf. einer Mulde mit Hinterschneidungen werden die einzelnen Bauteile vorab so segmentiert, daß an den einzelnen Blechen dieser Bauteile keine Tiefziehprobleme auftreten. Anschließend werden dann die einzelnen Bleche zusammengeschweißt.

Wie dies in der Fig. 2 dargestellt ist, wird hierzu ein Außenhautteil 16 der Heckklappe 13 zur Bildung einer ersten Blechkante 17 entsprechend einer definierten Trennlinie 18 bahngesteuert laserbeschnitten. Anschließend wird ein zweites Blechteil 19 mit komplementär laserbeschnittener Blechkante 20 angeschweißt. Dabei ist das zweite Blechteil 19 so geformt, daß sich in Verbindung mit dem ersten Blechteil 16 die tiefe Mulde 14 ergibt. Die Trennlinie 18 liegt dabei weitgehend unsichtbar an einem oberen, muldeninnenseitigen Muldenrand 21 oder bei einer alternativen Segmentierung in einem Bereich 22 unter der befestigten Kennzeichentafel 15.

Die Heckklappe 13 kann zur Herstellung der Mulde 14 als Einzelbauteil vor dem Einbau in die Karosserie 11 bearbeitet werden. Eine Bearbeitung ist jedoch auch an der fertigen Rohkarosserie möglich entsprechend dem vorstehend geschilderten Verfahren zur Radhausverbreiterung im Rahmen der Herstellung modifizierter Erscheinungsformen.

## Patentansprüche

1. Verfahren bei der Herstellung einer Kraftfahrzeugkarosserie mittels Laserschweißen, wobei
ein erstes Blechteil (6; 16) und ein zweites Blechteil (9; 19) an den jeweils zu verschweißenden Blechkanten (8, 10; 17, 20) durch wenigstens einen Laserkopf bahngeführt mit gleicher Bahn zur Herstellung jeweils eines komplementären Kantenverlaufs beschnitten werden,
die zu verschweißenden beiden Blechkanten (8, 10; 17, 20) mit ihrem komplementären, zugeordneten Kantenverlauf zusammengeführt werden, und
die beiden Blechkanten (8, 10; 17, 20) durch einen mit gleicher Bahn geführten Laserkopf miteinander verschweißt werden,
**dadurch gekennzeichnet, daß**
das erste Blechteil (6; 16) ein modifiziertes Außenhautteil der Fahrzeugkarosserie (11) ist und die zugeordnete, laserbeschnittene Blechkante (8; 17) eine definierte Schnittstelle (12; 18) an der Fahrzeugkarosserie (11) darstellt, die in einem zusätzlichen Verfahrensschritt an einem zunächst unmodifizierten Serienteil hergestellt ist, wobei von dem unmodifizierten Serienteil ein nicht mehr benötigtes Teilstück abgeschnitten wird, und das zweite Blechteil (9; 19) eine Außenhautkomponente der Fahrzeugkarosserie (11) ist, die ein Modifikationsteil mit einer in einem Verfahrensschritt hergestellten, laserbeschnittenen Blechkante (10; 20) mit einem komplementären Verlauf zu der definierten Schnittstelle (12; 18) darstellt, wobei die laserbeschnittenen Blechkanten (8, 10; 17, 20) des modifizierten Außenhautteils (6; 16) und der Außenhautkomponente (9; 19) an der definierten Schnittstelle (12, 18) zusammengeführt und anschließend miteinander laserverschweißt werden.

2. Verfahren nach Anspruch 1, **dadurch gekennzeichnet, daß** in einem Modulkonzept für modifizierbare Erscheinungsformen von Fahrzeugkarosserien (11) das Außenhautteil (6) ein tiefgezogenes Serienteil ist, an das die Außenhautkomponente (9) der Fahrzeugkarosserie (11) als Modifikationsteil angeschweißt wird, wobei Radhausverbreiterungen (4, 5), Motorbuckel, Spoiler, etc. ausbildbar sind.

3. Verfahren nach Anspruch 2, **dadurch gekennzeichnet, daß** Modifikationsteile an der fertigen Fahrzeugkarosserie (11), insbesondere einer fertigen Rohkarosserie angebracht werden.

4. Verfahren nach Anspruch 1, **dadurch gekennzeichnet, daß** zur Bildung von Mulden mit Hinterschneidungen und/oder zur Bildung tiefer Mulden (14), die schlecht tiefziehbar sind, das erste Außenhautteil (16) ohne oder nur teilweise mit einer Mulde (1 4) ausgebildet ist, dieses Außenhautteil (16) bahngesteuert laserbeschnitten zur Bildung einer ersten Blechkante (17) entsprechend einer definierten Trennlinie (18) wird und ein zweites Blechteil (19) mit komplementär laserbeschnittener Blechkante (20) angeschweißt wird, wobei das zweite Blechteil (19) so geformt ist, daß sich in Verbindung mit dem ersten Blechteil (16) eine Mulde mit Hinterschneidungen und/oder eine tiefe Mulde (14) ergibt.

5. Verfahren nach Anspruch 4, **dadurch gekennzeichnet, daß** die Mulde im Heckabschlußblech oder in der Heckklappe (13) zur Anbringung einer Kennzeichentafel (15) ausgebildet ist und die Trennlinie (18) bzw. die Schweißnaht an einem oberen Muldenrand (21) und/oder unter der Kennzeichentafel (15) verläuft.

6. Verfahren nach einem der Ansprüche 1 bis 5, **dadurch gekennzeichnet, daß** die beiden Blechteile (6, 9; 16, 19) mit überlappenden Randbereichen übereinandergelegt werden und mit nur einem Laserschnitt beide laserbeschnittenen Blechkanten (8, 10; 17, 20) hergestellt werden.

7. Verwendung eines der Verfahren nach einem der Ansprüche 1 bis 6 zur Herstellung einer Kraftfahrzeugkarosserie,
**dadurch gekennzeichnet, daß**
- erste Blechteile (16) modifizierte Außenhautteile der Fahrzeugkarosserie (11) sind und die zugeordneten, laserbeschnittenen Blechkanten (17) eine definierte Schnittstelle (18) an der Fahrzeugkarosserie (11) darstellen, die an einem zunächst unmodifizierten Serienteil hergestellt ist,
- zweite Blechteile (19) eine Außenhautkomponente der Fahrzeugkarosserie (11) sind, nämlich tiefe Mulden (14) und/oder Mulden mit Hinterschneidungen, insbesondere Mulden (14) zur Aufnahme von Kennzeichentafeln (15), die Modifikationsteile mit einer laserbeschnittenen Blechkante (20) mit einem komplementären Verlauf zu der definierten Schnittstelle (18) darstellen,
- wobei sowohl die modifizierten Außenhautteile in Form der ersten Blechteile (16) und die zugeordneten Außenhautkomponenten (19) in Form der zweiten Blechteile (19) an den komplementär laserbeschnittenen Blechkanten (17, 20) lasergeschweißt aneinandergeführt sind.

8. Verwendung eines der Verfahren nach einem der Ansprüche 1 bis 6 zur Herstellung einer
Kraftfahrzeugkarosserie,
**dadurch gekennzeichnet, daß**
- erste Blechteile (6) modifizierte Außenhautteile der Fahrzeugkarosserie (11) sind und die zugeordneten, laserbeschnittenen Blechkanten (8) eine definierte Schnittstelle (12) an der Fahrzeugkarosserie (11) darstellen, die an einem zunächst unmodifizierten Serienblechteil hergestellt ist,
- zweite Blechteile (9) Außenhautkomponenten der Fahrzeugkarosserie (11) sind, die modifizierte Erscheinungsformen von Fahrzeugkarosserien (11) wie insbesondere Radhausverbreiterungen (4, 5) und/oder Motorbuckel und/oder Spoilern definieren und Modifikationsteile mit einer laserbeschnittenen Blechkante (10) mit einem komplementären Verlauf zu der definierten Schnittstelle (12) darstellen,
- wobei sowohl die modifizierten Außenhautteile in Form der ersten Blechteile (6) und die zugeordneten Außenhautkomponenten in Form der zweiten Blechteile (9) an den komplementär laserbeschnittenen Blechkanten (8, 10) lasergeschweißt aneinandergeführt sind.

## Claims

1. Method for producing a motor vehicle body using laser welding, in which
a first sheet metal part (6; 16) and a second sheet metal part (9; 19) are trimmed at the sheet metal edges (8, 10; 17, 20) in each case to be welded by at least one laser head path guided in the same path to produce in each case a complementary edge profile,
the two sheet metal edges (8, 10; 17, 20) to be welded are brought together at their complementary, associated edge profiles, and
the two sheet metal edges (8, 10; 17, 20) are welded together by a laser head guided in the same path,
**characterized in that**
the first sheet metal part (6; 16) is a modified outer skin part of the vehicle body (11) and the associated, laser-trimmed sheet metal edge (8; 17) constitutes a defined interface (12; 18) on the vehicle body (11), which is produced in an additional method step on an initially unmodified standard part, wherein a no longer needed portion is cut away from the unmodified standard part, and the second sheet metal part (9; 19) is an outer skin component of the vehicle body (11), which constitutes a modifying part having a laser-trimmed sheet metal edge (10; 20), produced in one method step, with a complementary profile to the defined interface (12; 18), wherein the laser-trimmed sheet metal edges (8, 10; 17, 20) of the modified outer skin part (6; 16) and the outer skin component (9; 19) are brought together at the defined interface (12; 18) and then laser-welded together.

2. Method according to Claim 1, **characterized in that**, in a modular concept for modifiable embodiments of vehicle bodies (11), the outer skin part (6) is a deep-drawn standard part, to which the outer skin component (9) of the vehicle body (11) is welded as a modifying part, wherein wheel housing widenings (4, 5), engine bulges, spoilers etc. may be produced.

3. Method according to Claim 2, **characterized in that** modifying parts are attached to the finished vehicle body (11), in particular a finished body shell.

4. Method according to Claim 1, **characterized in that**, to form troughs with undercuts and/or to form deep troughs (14), which are difficult to deep-draw, the first outer skin part (16) is constructed without or only partly with a trough (14), said outer skin part (16) being laser-trimmed under continuous-path control to form a first sheet metal edge (17) in accordance with a defined dividing line (18) and a second sheet metal part (19) with a complementarily laser-trimmed sheet metal edge (20) is welded on, wherein the second sheet metal part (19) is so shaped that a trough with undercuts and/or a deep trough (14) is obtained in conjunction with the first sheet metal part (16).

5. Method according to Claim 4, **characterized in that** the trough is formed in the rear closing panel or in the tailgate (13) for attachment of a registration plate (15) and the dividing line (18) or the weld seam extends on an upper trough edge (21) and/or under the registration plate (15).

6. Method according to one of Claims 1 to 5, **characterized in that** the two sheet metal parts (6, 9; 16, 19) are placed one on top of the other with overlapping edge areas and the two laser-trimmed sheet metal edges (8, 10; 17, 20) are produced with just one laser cut.

7. Use of one of the methods according to one of Claims 1 to 6 to produce a motor vehicle body,
**characterized in that**
- first sheet metal parts (16) are modified outer skin parts of the vehicle body (11) and the associated, laser-trimmed sheet metal edges (17) constitute a defined interface (18) on the vehicle body (11), which is produced on an initially unmodified standard part,
- second sheet metal parts (19) are an outer skin component of the vehicle body (11), namely deep troughs (14) and/or troughs with undercuts, in particular troughs (14) for accommodating registration plates (15), which constitute modifying parts with a laser-trimmed sheet metal edge (20) with a complementary profile to the defined interface (18),
- both the modified outer skin parts in the form of the first sheet metal parts (16) and the associated outer skin components (19) in the form of the second sheet metal parts (19) being brought together by laser welding at the complementarily laser-trimmed sheet metal edges (17, 20).

8. Use of one of the methods according to one of Claims 1 to 6 to produce a motor vehicle body,
**characterized in that**
- first sheet metal parts (6) are modified outer skin parts of the vehicle body (11) and the associated, laser-trimmed sheet metal edges (8) constitute a defined interface (12) on the vehicle body (11), which is produced on an initially unmodified standard sheet metal part,
- second sheet metal parts (9) are outer skin components of the vehicle body (11), which define modified embodiments of motor vehicle bodies (11) such as in particular wheel housing widenings (4, 5) and/or engine bulges and/or spoilers and constitute modifying parts with a laser-trimmed sheet metal edge (10) with a complementary profile to the defined interface (12),
- both the modified outer skin parts in the form of the first sheet metal parts (6) and the associated outer skin components in the form of the second sheet metal parts (9) being brought together by laser welding at the complementarily laser-trimmed sheet metal edges (8, 10).

## Revendications

1. Procédé de fabrication d'une carrosserie de véhicule automobile par soudage au laser, dans lequel :
les bords (8, 10; 17, 20) d'un premier élément en tôle (6; 16) et d'un deuxième élément en tôle (9; 19) sont découpés par au moins une tête laser guidée sur un même parcours, pour réaliser des bords complémentaires,
les bords complémentaires associés (8, 10; 17, 20) des deux tôles à souder sont assemblés et
les deux bords de tôle (8, 10; 17, 20) sont soudés l'un à l'autre par une tête laser guidée sur un même parcours,
**caractérisé en ce que**
le premier élément en tôle (6; 16) est un élément modifié de peau extérieure de la carrosserie (11) de l'automobile et le bord de tôle (8; 17) associé et découpé au laser constitue sur la carrosserie (11) de l'automobile une interface définie (12; 18) qui est réalisée dans une étape supplémentaire de travail sur une pièce de série initialement non modifiée dans laquelle une partie devenue inutile est découpée dans la pièce de série non modifiée et **en ce que** le deuxième élément en tôle (9; 19) est un composant de peau extérieure de la carrosserie (11) du véhicule qui constitue un élément modifié dont le bord (10; 20) réalisé dans une étape de découpe au laser présente une forme complémentaire de l'interface (12; 18) définie, les bords de tôle (8, 10; 17, 20) découpés au laser de l'élément de peau extérieure (6; 16) et du composant de peau extérieure (9; 19) étant assemblés sur l'interface (12, 18) définie et ensuite soudés l'un à l'autre au laser.

2. Procédé selon la revendication 1, **caractérisé en ce que** dans le cadre d'une conception modulaire de formes modifiables de carrosseries (11) de véhicule, l'élément de peau extérieure (6) est une pièce de série emboutie à laquelle le composant de peau extérieure (9) de la carrosserie (11) du véhicule est soudé en tant que pièce modifiée, ce qui permet de réaliser des élargisseurs (4, 5) d'arche pour roue, des bombages de capot moteur, des déflecteurs, etc.

3. Procédé selon la revendication 2, **caractérisé en ce que** les éléments modifiés sont installés sur la carrosserie (11) terminée du véhicule et en particulier sur une carrosserie brute terminée.

4. Procédé selon la revendication 1, **caractérisé en ce que** pour former des moulures à contre-dépouilles et/ou pour former des moulures profondes (14) difficiles à emboutir, le premier élément de peau extérieure (16) est réalisé sans moulure (14) ou avec une moulure partielle, cet élément de peau extérieure (16) étant ensuite découpé au laser le long d'un parcours pour former une ligne définie de découpe (18) qui correspond à un premier bord de tôle (17), un deuxième élément en tôle (19) dont le bord (20) est découpé au laser dans une forme complémentaire étant soudé, le deuxième élément (19) en tôle étant formé de manière à obtenir en association avec le premier élément en tôle (16) une moulure à contre-dépouilles et/ou une moulure (14) profonde.

5. Procédé selon la revendication 4, **caractérisé en ce que** la moulure est formée dans la tôle du hayon arrière ou dans le hayon arrière (13) pour installer un panneau (15) pour plaque d'immatriculation, la ligne de découpe (18) ou le cordon de soudure s'étendant sur un bord supérieur (21) de la moulure et/ou en dessous du panneau (15) pour plaque d'immatriculation.

6. Procédé selon l'une des revendications 1 à 5, **caractérisé en ce que** les bordures des deux éléments en tôle (6, 9; 16, 19) sont posées l'une au-dessus de l'autre, les deux bords de tôle (8, 10; 17, 20) découpés au laser étant réalisés par une seule découpe au laser.

7. Utilisation d'un procédé selon l'une des revendications 1 à 6 pour la fabrication d'une carrosserie de véhicule automobile, **caractérisée en ce que**
les premiers éléments en tôle (16) sont des éléments modifiés de peau extérieure de la carrosserie (11) du véhicule et les bords de tôle (17) associés et découpés au laser constituent sur la carrosserie (11) du véhicule une interface (18) définie qui est réalisée sur une pièce de série initialement non modifiée,
les deuxièmes éléments en tôle (19) sont des composants de peau extérieure de la carrosserie (11) du véhicule, à savoir des moulures profondes (14) et/ou des moulures à contre-dépouilles, en particulier des moulures (14) destinées à recevoir un plateau (15) pour plaque d'immatriculation qui constitue un élément modifié en tôle dont le bord (20) découpé au laser a une forme complémentaire de l'interface (18) définie,
tant les éléments modifiés de peau extérieure qui présentent la forme des premiers éléments en tôle (16) que les composants de peau extérieure (19) associés qui présentent la forme des deuxièmes éléments en tôle (19) sont assemblés l'un contre l'autre et soudés au laser sur les bords complémentaires (17, 20) découpés au laser.

8. Utilisation de l'un des procédés selon l'une des revendications 1 à 6 pour fabriquer une carrosserie de véhicule automobile, **caractérisée en ce que**
les premiers éléments en tôle (6) sont des éléments modifiés de peau extérieure de la carrosserie (11) du véhicule et les bords de tôle (17) associés et découpés au laser constituent sur la carrosserie (11) du véhicule une interface (8) définie qui est réalisée sur une pièce de série initialement non modifiée,
les deuxièmes éléments en tôle (9) sont des composants de peau extérieure de la carrosserie (11) du véhicule qui définissent des formes modifiées de carrosseries (11) de véhicule, par exemple des élargisseurs (4, 5) d'arche pour roue, des bombages de capot moteur et/ou des déflecteurs, qui constituent un élément modifié en tôle dont le bord (10) découpé au laser a une forme complémentaire de l'interface (12) définie,
tant les éléments modifiés de peau extérieure qui présentent la forme des premiers éléments en tôle (6) que les composants de peau extérieure associés qui présentent la forme des deuxièmes éléments en tôle (9) sont assemblés l'un contre l'autre et soudés au laser sur les bords complémentaires (8, 10) découpés au laser.
